# EUROPÄISCHE PATENTSCHRIFT

(11) **EP 2 521 231 B1**
(45) Veröffentlichungstag und Bekanntmachung des Hinweises auf die Patenterteilung: **16.09.2015**
(21) Anmeldenummer: 12161968.8
(22) Anmeldetag: 29.03.2012
(51) Int. Cl.: H02G 3/08, H02G 3/12, H02G 3/38

(54) **Tauchglocke**
Diving bell
Cloche d'immersion

(30) Priorität: 03.05.2011 DE 202011100118 U
(43) Veröffentlichungstag der Anmeldung: 07.11.2012
(73) Patentinhaber: Kubik, Ralf, 63849 Leidersbach (DE)
(72) Erfinder: Kubik, Ralf, 63849 Leidersbach (DE)
(74) Vertreter: Ruckh, Rainer Gerhard

(56) Entgegenhaltungen:
- EP-A1- 1 578 146
- EP-A2- 2 051 572
- DE-A1- 19 646 481
- DE-A1- 19 856 776

## Beschreibung

Die Erfindung betrifft eine Tauchglocke für einen Strom-/Telekommunikationsverteiler eines Unterflursystems.

Unterflursysteme werden seit einiger Zeit verstärkt im Bereich der öffentlichen Energieversorgung und der Telekommunikation eingesetzt. Aus optischen und ästhetischen Gründen werden oberirdische Verteilerkästen mit elektrischen Verteilern, umfassend elektrische Anschlussmittel, wie zum Beispiel NH-Leisten für Hausanschlüsse, in Städten und Gemeinden verstärkt auch unter die Erde verlegt. Die hierzu installierten Unterflursysteme umfassen generell einen Strom-/Telekommunikationsverteiler, der in einem Schacht platziert wird, wobei der Schacht ebenerdig mit einem Schachtdeckel verschließbar ist.

Bei bekannten Unterflursystemen sind typischerweise Hebesysteme vorgesehen, mittels derer ein Strom-/Telekommunikationsverteiler in einen Schacht einfahrbar und aus diesem ausfahrbar ist. Müssen zu Wartungszwecken oder dergleichen am Strom-/Telekommunikationsverteiler Arbeiten verrichtet werden, wird der Strom-/Telekommunikationsverteiler aus dem Schacht ausgefahren, so dass er für das Bedienpersonal einfacher zugänglich ist.

Zum Schutz des Strom-/Telekommunikationsverteilers ist es bekannt, eine wasser- und gasdichte Tauchglocke vorzusehen, welche über den im Schacht liegenden Strom-/Telekommunikationsverteiler gestülpt ist.

Derartige Tauchglocken bestehen typischerweise aus Edelstahl oder tiefgezogenem, oftmals harzverstärktem Kunststoff. Die Ausbildung einer Tauchglocke aus Edelstahl ist sehr kostenintensiv. Abgesehen davon, dass Edelstahl sehr teuer ist, ist auch der Aufwand zum Schweißen von Edelstahlteilen sehr groß und zudem technisch schwierig. Auch der Aufwand zur Herstellung einer Tauchglocke ist unerwünscht hoch, da zu deren Herstellung sehr kostenintensive Tiefziehwerkzeuge bereitgestellt werden müssen. Ein weiterer wesentlicher Nachteil besteht darin, dass durch das Tiefziehwerkzeug die Größe der Tauchglocke fest vorgegeben ist. Applikationsspezifische Anpassungen der Größe der Tauchglocke sind somit generell nicht möglich. Dieser Nachteil gilt insoweit auch für Tauchglocken aus Edelstahl, da diese nach ihrer Fertigstellung nicht mehr in ihrer Größe variiert werden können.

Die DE 198 56 776 A1 betrifft einen Schaltschrank mit einer Schutzeinrichtung gegen elektromagnetische Strahlung. Der Schaltschrank weist ein Gerüst und Umhüllungsteile in der Gestalt von Seitenwänden, Rückwand und einem Dachblech auf. Eine Schutzeinrichtung gegen Störungen durch eine elektromagnetische Strahlung wird durch Folienstücke gebildet, die zwischen dem Gerüst und den Umhüllungsteilen angeordnet sind. Die Folienstücke sind elektrisch leitfähig und sind mittels üblicher Klebebänder am Gerüst zu befestigen, bevor die Umhüllungsteile angebracht werden. Der beschriebene Aufbau eines Schaltschrankes ergibt mit geringem Aufwand an Material und Arbeitszeit ein hohes Maß elektromagnetischer Verträglichkeit.

Die DE 196 46 481 A1 betrifft ein Gehäuse aus Metall für elektrische Baugruppen und Komponenten. Das Gehäuse weist einen Gehäusekanten und Gehäuseecken umfassenden Rahmen und von diesen aufnehmbare Seitenwänden sowie obere und untere Wänden auf. Die Gehäusekanten sind metallische Profilträger und die Gehäuseecken sind metallische Eckkörper. Jeder Eckkörper ist mit drei Profilträgern verschraubt, die sich in drei jeweils rechtwinklig zueinander ausgerichteten Richtungen erstrecken. Die Seitenwände sind durch in Nuten zumindest der vorderen und rückwärtigen Profilträger eingespannte Platten gebildet. Die oberen und unteren Wände sind als mit ihren Rändern in Nuten der vorderen und rückwärtigen Profilträger und Absätze der seitlichen Profilträger eingesetzte metallische Platten ausgebildet.

Die EP 1 578 146 A1 betrifft einen Träger für Telekommunikationsmodule. Der Träger umfasst ein Rahmengestell, sowie in diesem gelagerte Platten.

Die EP 2 051 572 A2 betrifft ein Gehäuse für elektronische Komponenten. Das Gehäuse weist einen Rahmen auf. Der Rahmen trägt Wandelemente, die aus Geweben bestehen. Diese bestehen zumindest teilweise aus elektromagnetisch abschirmenden Materialien.

Der Erfindung liegt die Aufgabe zugrunde, eine Tauchglocke der eingangs genannten Art bereitzustellen, welche kostengünstig herstellbar und flexibel einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Tauchglocke dient für einen Strom-/Telekommunikationsverteiler eines Unterflursystems mit wenigstens einem Gerüst und einem am Gerüst gespannten Bezug, der aus einem Wasser- und gasdichten Material besteht.

Ein wesentlicher Vorteil der erfindungsgemäßen Tauchglocke besteht darin, dass diese kostengünstig hergestellt werden kann. Der Bezug bildet ein wasser-und gasdichtes, flexibles Flächenelement, welches als gebrauchfertiges Kaufteil ohne nennenswerte fertigungstechnische Anpassungen zur Herstellung verwendet werden kann. Besonders vorteilhaft ist der Bezug von einer Folie oder Plane gebildet, die bevorzugt aus wasser- und gasdichtem Kunststoff besteht. Derartige Flächengebilde können kostengünstig als Meterware bezogen werden und brauchen für die Ausbildung einer wasser- und gasdichten Hülle der Tauchglocke nur geeignet zugeschnitten werden.

Das wenigstens eine Gerüst dient dazu, den wasser- und gasdichten Bezug fest einzuspannen, wodurch der Tauchglocke die gewünschte Geometrie verliehen wird. Dieses Gerüst ist ebenfalls kostengünstig herstellbar. Bevorzugt besteht das Gerüst aus Profilen, insbesondere Metallprofilen oder Kunststoffprofilen, die als Massenware kostengünstig zur Verfügung stehen. Die Profile können in einfacher Weise zu dem Gerüst zusammengefügt werden, wodurch die gewünschte Geometrie der Tauchglocke einfach vorgegeben werden kann.

Die Montage der Tauchglocke kann mit geringem konstruktivem Aufwand schnell und einfach durchgeführt werden. Nach Erstellen des Gerüsts muss der wasser- und gasdichte Bezug nur auf dem Gerüst aufgespannt und dann an diesem fixiert werden. Vorteilhaft erfolgt dieses Fixieren am unteren offenen Rand der Tauchglocke, wobei hierzu vorteilhaft ein Profil am gesamten unteren Rand der Tauchglocke umläuft. Dort kann der wasser- und gasdichte Bezug verschraubt oder verspannt werden.

Ein wesentlicher Vorteil der erfindungsgemäßen Tauchglocke besteht darin, dass das Fertigungsverfahren zur Herstellung der Tauchglocke nicht auf eine bestimmte Geometrie der Tauchglocke festgelegt ist. Dies bedeutet, dass ein flexibles Fertigungsverfahren zur Herstellung der Tauchglocke bereitgestellt wird, das die Fertigung von Tauchglocken in unterschiedlichen Größen ermöglicht.

Besonders vorteilhaft bildet das wenigstens eine Gerüst ein größenverstellbares Modul.

Zweckmäßig ist das wenigstens eine Gerüst dadurch größenverstellbar, dass dieses zumindest teilweise aus verstellbaren Profilen besteht.

Durch diese Größenverstellbarkeit kann während des Fertigungsprozesses der Tauchglocke deren Größe besonders einfach vorgegeben werden. Die Anpassung des Bezugs auf die jeweils eingestellte Größe des Gerüsts kann schnell und einfach durch ein geeignetes Zuschneiden erfolgen.

Besonders vorteilhaft kann die Größenverstellbarkeit des wenigstens einen Gerüsts auch dazu genutzt werden, die Größe der Tauchglocke nach deren Fertigstellung, insbesondere am Einsatzort, applikationsspezifisch anzupassen. Eine derartige nachträgliche Größenanpassung kann beispielsweise erforderlich sein um Montagetoleranzen auszugleichen oder um eine Anpassung der Tauchglocke an sich verändernde Einsatzbedingungen zu ermöglichen.

Um eine nachträgliche Größenanpassung der Tauchglocke insbesondere am Einsatzort zu gewährleisten, ist es erforderlich, dass die Fläche des an wenigstens einem Gerüst gespannten Bezugs an die Größe des wenigstens einen Gerüsts angepasst ist.

Hierzu ist vorteilhaft die Größe der gespannten Fläche des Bezugs durch Ein-und Ausfahren aus einem Flächenvorrat einstellbar.

Insbesondere ist der Flächenvorrat von gefalteten oder aufgerollten Segmenten des Bezugs gebildet.

Für eine Flächenvergrößerung beziehungsweise -verkleinerung braucht somit der Bezug am Flächenvorrat nur ausgefaltet oder ausgerollt beziehungsweise eingefaltet oder eingerollt werden.

Zweckmäßig sind hierbei an geometrisch günstigen Lagen mehrere Flächenvorräte so angeordnet, dass eine Größenanpassung der Tauchglocke sowohl in der Höhe als auch in der Breite möglich wird.

Gemäß einer besonders vorteilhaften Erfindung weist die Tauchglocke als erstes Gerüst ein Außengerüst und als zweites Gerüst ein Innengerüst auf, wobei der Bezug zwischen dem Innengerüst und dem Außengerüst gespannt ist.

Bei dieser Ausführungsform ist der wasser- und gasdichte Bezug zwischen dem Innen- und Außengerüst lagefixiert, wodurch eine besonders hohe Formstabilität der Tauchglocke erhalten wird.

Der wasser- und gasdichte Bezug, besonders vorteilhaft in Form einer Folie oder Plane, weist vorzugsweise eine hohe Stabilität, insbesondere Reißfestigkeit auf, so dass auch bei Vorhandensein von mechanischen Störeinflüssen keine Beschädigungen des Bezugs auftreten. In diesem Fall kann die Tauchglocke allein aus dem wenigstens einen Gerüst und dem wasser- und gasdichten Bezug bestehen, wodurch ein sehr einfacher Aufbau erhalten wird.

Als mechanischer Schutz für den Bezug können Schutzplatten an dem wenigstens einen Gerüst vorgesehen sein.

In diesem Fall muss der Bezug keine erhöhte Stabilität aufweisen. Somit braucht der Bezug lediglich wasser- und gasdicht ausgebildet sein. Die die mechanische Schutzfunktion gewährleistenden Schutzplatten müssen keine wasserdichte Ummantelung bilden und können somit aus leichten, kostengünstig herstellbaren Elementen bestehen.

Für den Einsatz der erfindungsgemäßen Tauchglocke in einem Unterflursystem ist dieser bevorzugt ein Hebesystem zugeordnet.

Derartige Hebesysteme dienen dazu, einen Strom-/Telekommunikationsverteiler in einen Schacht ein- und auszufahren. Die Tauchglocke ist über den Strom-/Telekommunikationsverteiler gestülpt und in einer waagerechten Position gehalten, so dass kein Wasser in die Tauchglocke eindringen kann, solange der Strom-/Telekommunikationsverteiler ganz oder teilweise im Schacht angeordnet ist. Wenn bei Ausfahren des Strom-/Telekommunikationsverteilers aus dem Schacht die Unterkante der Tauchglocke die Oberkante des Schachts erreicht, wird der Verteiler aus der Tauchglocke gelöst.

Durch den Einsatz der Tauchglocke ist der im Schacht angeordnete Strom-/Telekommunikationsverteiler vollständig gegen in den Schacht eindringendes Wasser geschützt, so dass Wasserschäden am Strom-/Telekommunikationsverteiler vollständig vermieden werden. Das Prinzip des mit der Tauchglocke erzielten Schutzes des Strom-/Telekommunikationsverteilers beruht darauf, dass die über den Strom-/Telekommunikationsverteiler gestülpte Tauchglocke waagerecht orientiert ist und damit auch das untere offene Ende der Tauchglocke. Durch die waagerechte Orientierung der Tauchglocke kann die in dieser angeordneten Luft bei Eindringen von Wasser in den Schacht nicht entweichen, was bedeutet, dass das Wasser nicht in Kontakt mit dem Strom-/Telekommunikationsverteiler kommen kann. Voraussetzung hierfür ist natürlich, dass der Verteiler vollständig im Innenraum der Tauchglocke liegt.

Gemäß einer ersten Variante weist das Hebesystem ein Teleskopsystem auf, mittels dessen der Verteiler senkrecht anhebbar oder absenkbar ist. Mittels des Teleskopsystems ist auch die Tauchglocke vom Verteiler lösbar, indem die Tauchglocke über den Verteiler hinaus nach oben verfahrbar ist. Die Tauchglocke ist an der Unterseite des Schachtdeckels befestigt und mit dem Schachtdeckel vom Verteiler weg nach oben verfahrbar.

Gemäß einer zweiten Variante weist das Hebesystem eine Hebegabel auf, mittels derer der Verteiler senkrecht anhebbar oder absenkbar ist. Bei im Schacht angeordnetem Verteiler sitzt die Tauchglocke auf der Hebegabel auf. Die Tauchglocke wird an einer Schwenklagerung gelagert und vom Verteiler weggeschwenkt, sobald die Unterkante der Tauchglocke die Oberkante des Schachts erreicht hat.

Die Erfindung wird im Folgenden anhand der Zeichnungen erläutert. Es zeigen:
- Figur 1:: Erstes Ausführungsbeispiel der erfindungsgemäßen Tauchglocke.
- Figur 2:: Zweites Ausführungsbeispiel der erfindungsgemäßen Tauchglocke.

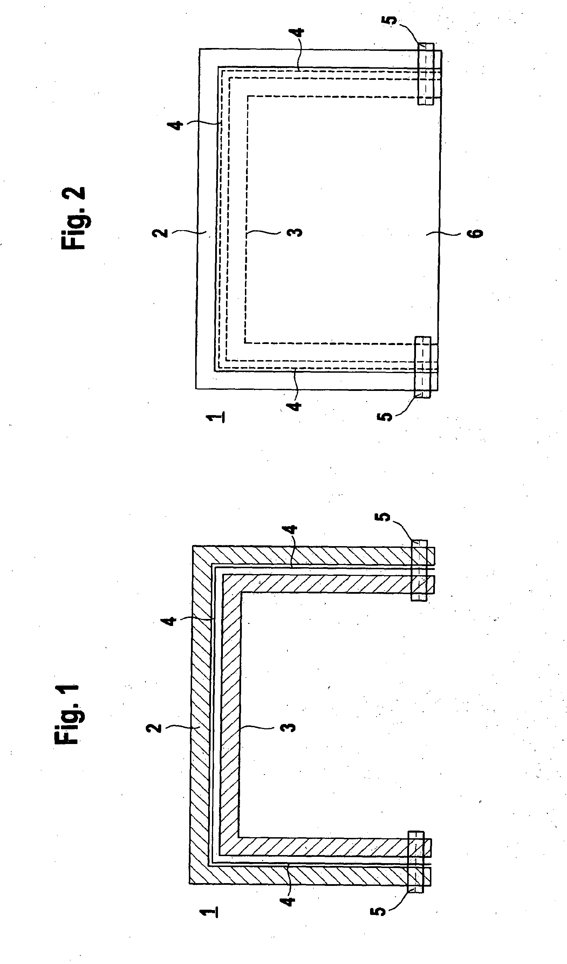

Figur 1 zeigt ein erstes Ausführungsbeispiel einer Tauchglocke 1 als Schutzvorrichtung für einen Strom-/Telekommunikationsverteiler eines Unterflursystems.

Die Tauchglocke 1 ist an ihrer Oberseite und an ihren Seitenflächen geschlossen, die Unterseite der Tauchglocke 1 ist dagegen offen, so dass über diese offene Unterseite der Strom-/Telekommunikationsverteiler in den Innenraum der Tauchglocke 1 eingeführt werden kann.

Die Tauchglocke 1 weist eine Gerüststruktur bestehend aus mehreren Profilen auf, die aus metallischen Werkstoffen oder aus Kunststoff-Werkstoffen bestehen. Im vorliegenden Fall weist die Gerüststruktur ein Außengerüst 2 und ein in dieses eingesetztes Innengerüst 3 auf. Die Konturen des Außengerüsts 2 und des Innengerüsts 3 sind aneinander angepasst, so dass zwischen diesen ein konstanter, sich entlang deren Mantelfläche erstreckender Spalt verbleibt.

Die Tauchglocke 1 weist im vorliegenden Fall eine quaderförmige Kontur auf. Die Profile des Außengerüsts 2 und Innengerüsts 3 verlaufen entsprechend dieser Kontur in horizontaler und vertikaler Richtung. Die einzelnen Profile können dabei durch Schweißverbindungen verbunden werden. Anstelle einer quaderförmigen Kontur kann die Tauchglocke 1 auch andere Geometrien, beispielsweise eine hohlzylindrische Geometrie, aufweisen.

Die Gerüststruktur bildet ein größenverstellbares Modul, das heißt sowohl das Außengerüst 2 als auch das Innengerüst 3 sind in ihrer Größe einstellbar. Hierzu ist zumindest ein Teil der das Außengerüst 2 beziehungsweise Innengerüst 3 ausbildenden Profile verstellbar. Vorzugsweise bilden die Profile hierzu Teleskopstangen, die für eine Größenverstellung ein- und ausgefahren werden können. Damit kann sowohl das Außengerüst 2 als auch das Innengerüst 3 in seiner Breite als auch in seiner Höhe verstellt werden.

Zwischen dem Außengerüst 2 und dem Innengerüst 3 ist ein wasser- und gasdichter Bezug 4 gespannt, der vorzugsweise von einer Folie oder Plane gebildet ist. Der Bezug 4 bildet ein flexibles Flächengebilde, das vorzugsweise aus reißfestem Kunststoff besteht.

Der Bezug 4 ist so zwischen Außengerüst 2 und Innengerüst 3 gespannt, dass er sich über die gesamten Seitenflächen und die Oberseite der Tauchglocke 1 erstreckt und so eine wasser- und gasdichte Glocke bildet, die durch das Außengerüst 2 und Innengerüst 3 exakt und stabil in ihrer Sollform gehalten ist.

Im einfachsten Fall ist die Größe des Bezugs 4 an die einmalig während der Fertigung festgelegten Größen des Außengerüsts 2 und Innengerüsts 3 angepasst. Die Größe der Tauchglocke 1 ist damit werkseitig fest vorgegeben.

Um am Einsatzort auch noch eine Größenverstellung der Tauchglocke 1 durchzuführen, ist bevorzugt der Bezug 4 so dimensioniert, dass der Bezug 4 außer der am Außengerüst 2 und Innengerüst 3 gespannten Fläche auch einen aufgerollten oder aufgefalteten Flächenvorrat ausbildet. Durch Ausfalten oder Ausrollen eines Teils des Flächenvorrats kann die gespannte Fläche des Bezugs 4 und damit die Dimension der Tauchglocke 1 vergrößert werden, wobei hierzu auch die Profile des Außengerüsts 2 und Innengerüst 3 auszufahren sind. Umgekehrt kann in entsprechender Weise auch die Größe der Tauchglocke 1 reduziert werden. Durch eine geeignete Positionierung des Flächenvorrats kann sowohl die Höhe als auch die Breite der Tauchglocke 1 verändert werden.

Die Fixierung des Bezugs 4 erfolgt am unteren Rand der Tauchglocke 1, wobei hierzu im vorliegenden Fall Pressverbindungen 5 vorgesehen sind, mittels derer der Bezug 4 am unteren Rand der Tauchglocke 1 festgepresst wird. Dadurch ist der Bezug 4 über die gesamte Mantelfläche der Tauchglocke 1 fest gespannt. Alternativ können hierzu auch Spannmittel oder Verschraubungen vorgesehen sein. Mit diesen oder weiteren zusätzlichen Elementen werden zugleich das Außengerüst 2 und das Innengerüst 3 miteinander fest verbunden.

Figur 2 zeigt eine Erweiterung der Ausführungsform gemäß Figur 1. Die Tauchglocke 1 gemäß Figur 2 entspricht hinsichtlich der Ausbildung des Außengerüsts 2, des Innengerüsts 3 und des dort eingespannten Bezugs 4 exakt der Ausführungsform gemäß Figur 1. Als zusätzlicher mechanischer Schutz des Bezugs 4 sind zwischen dem Außengerüst 2 und Innengerüst 3 Schutzplatten vorgesehen. Diese werden bevorzugt am Außengerüst 2 oder Innengerüst 3 verschraubt. Zweckmäßig erstrecken sich die Schutzplatten über die gesamten Seitenflächen und die Oberseite der Tauchglocke 1 und decken damit den Bezug 4 von innen oder außen ab, wodurch diese gegen mechanische Beschädigungen gesichert ist.

### Bezugszeichenliste

- (1): Tauchglocke
- (2): Außengerüst
- (3): Innengerüst
- (4): Bezug
- (5): Pressverbindung

## Patentansprüche

1. Tauchglocke (1) für einen Strom-/Telekommunikationsverteiler eines Unterflursystems mit wenigstens einem Gerüst und einem am Gerüst gespannten Bezug (4), der aus einem Wasser- und gasdichten Material besteht.

2. Tauchglocke nach Anspruch 1, **dadurch gekennzeichnet, dass** das wenigstens eine Gerüst ein größenverstellbares Modul bildet.

3. Tauchglocke nach Anspruch 2, **dadurch gekennzeichnet, dass** das wenigstens eine Gerüst in seiner Höhe und in seiner Breite verstellbar ist.

4. Tauchglocke nach einem der Ansprüche 2 oder 3, **dadurch gekennzeichnet, dass** das wenigstens eine Gerüst dadurch größenverstellbar ist, dass dieses zumindest teilweise aus verstellbaren Profilen besteht.

5. Tauchglocke nach Anspruch 4, **dadurch gekennzeichnet, dass** die Profile aus Metall oder Kunststoff bestehen.

6. Tauchglocke nach einem der Ansprüche 1 bis 5, **dadurch gekennzeichnet, dass** diese als erstes Gerüst ein Außengerüst (2) und als zweites Gerüst ein Innengerüst (3) aufweist, wobei der Bezug (4) zwischen dem Innengerüst (3) und dem Außengerüst (2) gespannt ist.

7. Tauchglocke nach einem der Ansprüche 1 bis 6, **dadurch gekennzeichnet, dass** die Fläche des am wenigstens einen Gerüst gespannten Bezugs (4) an die Größe des wenigstens einen Gerüsts angepasst ist.

8. Tauchglocke nach Anspruch 7, **dadurch gekennzeichnet, dass** die Größe der gespannten Fläche des Bezugs (4) durch Ein- und Ausfahren aus einem Flächenvorrat einstellbar ist.

9. Tauchglocke nach Anspruch 8, **dadurch gekennzeichnet, dass** der Flächenvorrat von gefalteten oder aufgerollten Segmenten des Bezugs (4) gebildet ist.

10. Tauchglocke nach einem der Ansprüche 1 bis 9, **dadurch gekennzeichnet, dass** der Bezug (4) von einer Folie oder Plane gebildet ist.

11. Tauchglocke nach einem der Ansprüche 1 bis 10, **dadurch gekennzeichnet, dass** der am wenigstens einen Gerüst gespannte Bezug (4) an dessen unterem Rand fixiert ist.

12. Tauchglocke nach Anspruch 11, **dadurch gekennzeichnet, dass** zur Fixierung des Bezugs (4) Pressverbindungen (5), Spannmittel und/oder Verschraubungen vorgesehen sind.

13. Tauchglocke nach einem der Ansprüche 1 bis 12, **dadurch gekennzeichnet, dass** als mechanischer Schutz für den Bezug (4) Schutzplatten an dem wenigstens einen Gerüst vorgesehen sind.

## Claims

1. Immersion bell (1) for a power/telecommunications distributer of an underfloor system with at least one housing and a cover (4), which is clamped to the housing and which consists of a watertight and gastight material.

2. Immersion bell according to claim 1, **characterised in that** the at least one housing forms a module adjustable in size.

3. Immersion bell according to claim 2, **characterised in that** the at least one housing is adjustable in its height and its width.

4. Immersion bell according to one of claims 2 and 3, **characterised in that** the at least one housing is adjustable in size **in that** this consists at least partly of adjustable sections.

5. Immersion bell according to claim 4, **characterised in that** the sections consist of metal or plastics material.

6. Immersion bell according to any one of claims 1 to 5, **characterised in that** this comprises an outer housing (2) as first housing and an inner housing (3) as second housing, wherein the cover (4) is clamped between the inner housing (3) and the outer housing (2).

7. Immersion bell according to any one of claims 1 to 6, **characterised in that** the area of the cover (4) clamped to the at least one housing is adapted to the size of the at least one housing.

8. Immersion bell according to claim 7, **characterised in that** the size of the clamped area of the cover (4) is settable by movement in and out of a reserve area.

9. Immersion bell according to claim 8, **characterised in that** the reserve area is formed by folded or rolled-up segments of the cover (4).

10. Immersion bell according to any one of claims 1 to 9, **characterised in that** the cover (4) is formed by a foil or planar element.

11. Immersion bell according to any one of claims 1 to 10, **characterised in that** the cover (4) clamped to the at least one housing is fixed at the lower edge thereof.

12. Immersion bell according to claim 11, **characterised in that** press connections (5), clamping means and/or screw connections are provided for fixing the cover (4).

13. Immersion bell according to any one of claims 1 to 12, **characterised in that** protective plates are provided at the at least one housing as mechanical protection for the cover (4).

## Revendications

1. Cloche d'immersion (1) pour un distributeur de courant/télécommunication d'un système souterrain, comportant au moins un bâti et une enveloppe (4) tendue sur le bâti, qui est constituée d'un matériau étanche à l'eau et aux gaz.

2. Cloche d'immersion selon la revendication 1, **caractérisée en ce que** ledit au moins un bâti forme un module réglable en taille.

3. Cloche d'immersion selon la revendication 2, **caractérisée en ce que** ledit au moins un bâti est réglable en hauteur et en largeur.

4. Cloche d'immersion selon l'une des revendications 2 ou 3, **caractérisée en ce que** ledit au moins un bâti est réglable en taille par le fait qu'il est constitué au moins partiellement de profilés réglables.

5. Cloche d'immersion selon la revendication 4, **caractérisée en ce que** les profilés sont constitués de métal ou de matière plastique.

6. Cloche d'immersion selon l'une des revendications 1 à 5, **caractérisée en ce que** celle-ci présente en tant que premier bâti un bâti extérieur (2) et en tant que deuxième bâti un bâti intérieur (3), l'enveloppe (4) étant tendue entre le bâti intérieur (3) et le bâti extérieur (2).

7. Cloche d'immersion selon l'une des revendications 1 à 6, **caractérisée en ce que** la surface de l'enveloppe (4) tendue sur ledit au moins un bâti est adaptée à la taille dudit au moins un bâti.

8. Cloche d'immersion selon la revendication 7, **caractérisée en ce que** la taille de la surface tendue de l'enveloppe (4) est réglable en la faisant entrer et sortir depuis une réserve de surface.

9. Cloche d'immersion selon la revendication 8, **caractérisée en ce que** la réserve de surface est formée par des segments pliés ou enroulés de l'enveloppe (4).

10. Cloche d'immersion selon l'une des revendications 1 à 9, **caractérisée en ce que** l'enveloppe (4) est formée par un film ou une bâche.

11. Cloche d'immersion selon l'une des revendications 1 à 10, **caractérisée en ce que** l'enveloppe (4) tendue sur ledit au moins un bâti est fixée à son bord inférieur.

12. Cloche d'immersion selon la revendication 11, **caractérisée en ce que** des liaisons par pression (5), des moyens de serrage et/ou des raccords à vis sont prévus pour la fixation de l'enveloppe (4).

13. Cloche d'immersion selon l'une des revendications 1 à 12, **caractérisée en ce que** des plaques de protection sont prévues sur ledit au moins un bâti en tant que protection mécanique pour l'enveloppe (4).
